# DEMANDE DE BREVET EUROPEEN

(11) **EP 0 904 820 A1**
(43) Date de publication de la demande: **31.03.1999**
(21) Numéro de dépôt: 98402359.8
(22) Date de dépôt: 24.09.1998
(51) Int. Cl.: B01D 29/72, B01D 65/02

(54) **Dispositif contre le colmatage d'un filtre**

(30) Priorité: 26.09.1997 FR 9712029
(71) Demandeur: E.I.F., F-93100 Montreuil (FR)
(72) Inventeur: Coric, Philippe, 44700 Orvault (FR)
(74) Mandataire: Moncheny, Michel

(57) **Abrégé**

L'invention conceme un dispositif (18) contre le colmatage d'un filtre (2) d'un fluide, notamment d'un liquide (3), comprenant un filtre (2) comportant un élément filtrant (11) disposé dans une cavité (10) de filtre délimitée par une enveloppe (8) externe. Le dispositif (18) contre le colmatage comprend au moins un émetteur d'ultrasons (20) et des moyens associés de couplage des ultrasons émis par l'émetteur (20) dans ladite cavité (10) en direction de l'élément filtrant (11) pour empêcher le colmatage de l'élément filtrant (11) lors du fonctionnement du filtre.

## Description

L'invention est relative à un dispositif contre le colmatage d'un filtre d'un fluide, notamment d'un liquide.

Pour un grand nombre des filtres existants, il se pose le problème du colmatage des éléments filtrants par des particules, diminuant de façon sensible les capacités du filtre au cours de son fonctionnement.

Afin de remédier à cette baisse de capacité, on est contraint de prévoir des interventions régulières de maintenance lors desquelles on remplace l'élément filtrant colmaté ou on procède à un nettoyage de l'élément filtrant par des moyens externes.

Toutefois, ces interventions régulières de maintenance sont fréquentes et conduisent à chaque fois à un arrêt temporaire du processus de filtration et donc à un arrêt de l'installation dont le filtre fait partie, ce qui influe défavorablement sur le coût d'exploitation de cette installation.

L'invention vise pallier cet inconvénient en proposant un dispositif contre le colmatage d'un filtre permettant d'améliorer sensiblement les performances de filtrage du filtre, notamment à long terme, et diminuant la fréquence des interventions de maintenance pour cause de colmatage de l'élément filtrant.

A cet effet, l'invention a pour objet un dispositif contre le colmatage d'un filtre d'un fluide, notamment d'un liquide comportant un élément filtrant disposé dans une cavité de filtre délimitée par une enveloppe externe, caractérisé en ce qu'il comprend au moins un émetteur d'ultrasons et des moyens associés de couplage des ultrasons émis par l'émetteur dans ladite cavité, en direction de l'élément filtrant, pour empêcher le colmatage de l'élément filtrant lors du fonctionnement du filtre.

Le dispositif de filtrage selon l'invention peut de plus comporter une ou plusieurs des caractéristiques suivantes :
- les ultrasons émis par chaque émetteur possèdent une fréquence comprise entre 30 et 50kHz, et notamment de 40kHz,
- la puissance d'émission de chaque émetteur est supérieure à 100 W, notamment comprise entre 100W et 400W, ou supérieure à 600W,
- les moyens de couplage comprennent pour chaque émetteur d'ultrasons une masse oscillante qui est interposée entre l'émetteur d'ultrasons et la cavité, et qui est acoustiquement accordée par rapport à la géométrie de la cavité et à celle de l'élément filtrant,
- la masse oscillante est en métal,
- chaque masse oscillante entoure le filtre et est en contact intime avec celui-ci,
- il comporte pour une masse oscillante au moins deux émetteurs d'ultrasons disposés de part et d'autre du filtre,
- chaque masse oscillante comporte un passage destiné à former l'enveloppe externe du filtre,
- chaque masse oscillante comporte un passage destiné à contenir l'enveloppe externe du filtre,
- un milieu de transfert, notamment une graisse, est prévu entre la masse oscillante et l'enveloppe externe du filtre,
- dans le cas, où le filtre est un filtre de filtration tangentielle d'un liquide, dont l'enveloppe externe est réalisée par un tube, et dont l'élément filtrant possède une forme tubulaire et est disposé sensiblement coaxialement dans le tube de façon à diviser la cavité en une partie centrale traversée par le liquide à filtrer et une partie périphérique d'accumulation de filtrat, une sortie de filtrat étant ménagée dans la paroi de l'enveloppe, le dispositif contre le colmatage comporte au moins deux émetteurs d'ultrasons et deux moyens associés de couplage des ultrasons émis par les émetteurs dans la cavité, les émetteurs et les moyens associés de couplage étant agencés respectivement de part et d'autre de la sortie de filtrat,
- la direction d'émission de chaque émetteur est orientée perpendiculairement à l'axe longitudinal de l'enveloppe externe et de l'élément filtrant,
- chaque masse oscillante entoure l'enveloppe externe du filtre et comporte au moins un évidement s'étendant suivant un plan longitudinal contenant l'axe du filtre, perpendiculaire à la direction d'émission de l'émetteur correspondant pour concentrer l'intensité des ultrasons au niveau de l'élément filtrant,
- il comprend en outre une unité d'activation intermittente de chaque émetteur,
- il comprend un capteur de mesure du degré de colmatage de l'élément filtrant, des moyens de comparaison du degré mesuré de colmatage avec un seuil prédéfini, qui commandent l'activation dudit au moins un émetteur d'ultrasons lorsque le degré de colmatage de l'élément filtrat est supérieur au seuil prédéfini,
- le capteur de mesure du degré de colmatage de l'élément filtrant est un débitmètre de mesure du débit du filtrat obtenu.

De plus, l'invention a pour objet un dispositif de filtrage comprenant un filtre d'un fluide, notamment d'un liquide comportant un élément filtrant disposé dans une cavité de filtre délimitée par une enveloppe externe, caractérisé en ce qu'il comprend en outre un dispositif contre le colmatage du filtre défini ci-dessus.

L'invention sera mieux comprise à l'aide de la description qui va suivre, donnée uniquement à titre d'exemple et faite en se référant aux dessins annexés, sur lesquels :
- la Figure 1 est un schéma partiellement en coupe d'un dispositif de filtrage selon l'invention,
- la Figure 2 est une vue schématique en coupe selon la ligne II-II de la figure 1,
- la Figure 3 est une vue identique à celle de la figure 2 d'une variante du dispositif selon l'invention.

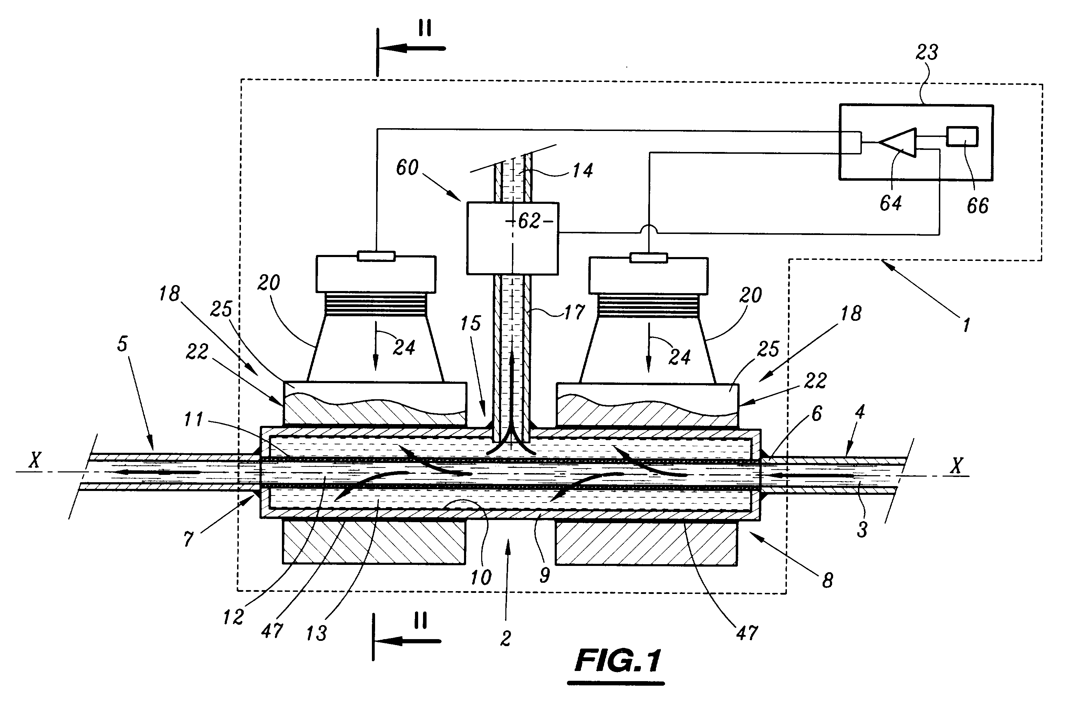

Sur la figure 1 est représenté un schéma d'un dispositif 1 de filtrage d'un fluide, notamment d'un liquide, selon un premier exemple de réalisation.

Ce dispositif 1 comprend un filtre 2 de filtration tangentielle disposé dans un circuit en boucle d'un liquide 3 à filtrer, dont seuls les conduits d'arrivée 4 et d'évacuation 5, respectivement raccordés à une entrée 6 et une sortie 7 du filtre 2 pour le liquide à filtrer 3 sont représentés.

Le filtre 2 comprend une enveloppe 8 externe formée par un tube 9 de section transversale circulaire et délimitant une cavité 10 de filtre.

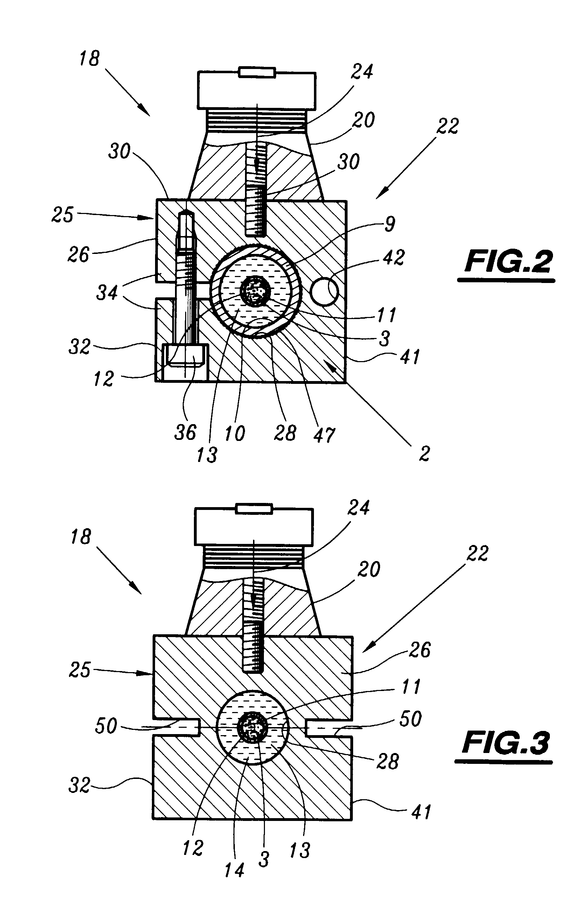

Un élément filtrant 11 de forme tubulaire est fixé sensiblement coaxialement à l'intérieur du tube 9, dans la cavité 10. Comme on le voit sur la figure 2, cet élément filtrant 11 divise la cavité 10 en une partie centrale 12 dans laquelle circule le liquide 3 à filtrer et en une partie périphérique 13 dans laquelle s'accumule le liquide 3, après avoir traversé l'élément filtrant 11, sous la forme d'un filtrat 14.

Ainsi que cela est représenté sur la figure 1, une sortie 15 de filtrat est ménagée à la mi-longueur du tube 9 dans son enveloppe externe 8 et raccordée à un conduit 17 d'évacuation du filtrat 14.

Afin d'empêcher un colmatage de l'élément filtrant 11, le dispositif de filtrage 1 comprend en outre un dispositif 18 contre le colmatage de l'élément filtrant 11. Ce dispositif 18 contre le colmatage de l'élément filtrant 11 comprend deux émetteurs d'ultrasons 20 respectivement agencés de part et d'autre de la sortie 15 de filtrat sur l'enveloppe externe 8 par l'intermédiaire de moyens 22 associés de couplage des ultrasons émis par les émetteurs 20 dans la cavité 10, en direction de l'élément filtrant 11.

Les émetteurs 20 sont du type piézo-électrique ou magnétostrictif et sont reliés à une unité 23 commune d'activation.

A titre d'exemple, les ultrasons émis par chaque émetteur 20 possèdent une fréquence comprise entre 30kHz et 50kHz et notamment de 40kHz et la puissance d'émission de chaque émetteur 20 est supérieure à 100W, notamment comprise entre 100 et 400W, ou supérieure à 600W.

En outre, la direction d'émission des émetteurs 20, indiquée par une flèche 24, est sensiblement perpendiculaire à l'axe longitudinal X-X du tube 9 et de l'élément filtrant 11.

Les moyens 22 de couplage comprennent pour chaque émetteur 20 une masse oscillante 25, de préférence en métal. Par "masse oscillante", on entend une masse qui oscille lors de l'application d'ultrasons sur elle et qui n'absorbe pratiquement pas l'énergie acoustique émise par les émetteurs 20 pour permettre une transmission efficace des ondes acoustiques au filtre 2.

Comme on le voit sur la figure 2, une telle masse oscillante 25 est formée par un bloc métallique 26 de section transversale carrée et sur une face externe 30 duquel est fixé l'émetteur 20, par exemple au moyen d'une vis 30, et qui comprend un passage central 28 de section circulaire, adapté pour permettre l'enfilage du bloc 26 sur l'enveloppe externe 8 de sorte que il entoure le filtre 2.

En outre, pour assurer un contact intime entre le bloc 26 et l'enveloppe 8, le bloc 26 est fendu sur un côté 32 adjacent à la face 30 de façon à former des mâchoires 34 de serrage et comprend de plus une vis de serrage 36 de ces mâchoires 34.

Sur le côté 41, opposé aux mâchoires 34, un trou 42 traversant, s'étendant parallèlement aux mâchoires 34 est ménagé dans le bloc 26 afin d'équilibrer la répartition de masse du bloc 26 pour ainsi homogénéiser la transmission des ultrasons vers l'élément filtrant 11.

Par ailleurs, un milieu de transfert 47, comme par exemple une graisse, est interposé entre le bloc 26 et l'enveloppe externe 8 pour améliorer le couplage acoustique entre eux.

Les dimensions du bloc 26 sont choisies de telle sorte qu'il est acoustiquement accordé, notamment par rapport à la géométrie de la cavité 10 et à celle de l'élément filtrant 11.

Selon une variante du dispositif 18 contre le colmatage, représentée à la figure 3, la masse oscillante 25 formée par le bloc métallique 26 fait partie de l'enveloppe externe 8 du filtre 2.

Dans ce cas, la paroi du passage central 28 du bloc 26 fait office de d'enveloppe externe 8 du filtre 2.

En outre, pour concentrer l'intensité des ultrasons au niveau de l'élément filtrant 11, le bloc 26 comporte de part et d'autre de la cavité 10, sur ses côtés 32 et 41, au lieu des mâchoires 34 et du trou traversant 42, respectivement un évidement 50 en forme de rainure s'étendant suivant un plan central longitudinal du filtre 2, perpendiculaire à la direction d'émission 24 de l'émetteur 20.

En référence à la figure 1, le dispositif 1 comprend de plus un capteur 60 de mesure du degré de colmatage de l'élément filtrant 11. Ce capteur 60 est formé par un débitmètre 62 installé dans le conduit 17 d'évacuation de filtrat et est relié à l'unité 23 d'activation des émetteurs 20.

L'unité d'activation 23 comprend des moyens 64 de comparaison entre le débit relevé par le débitmètre 62 et une valeur de seuil minimum prédéfini, enregistré dans une mémoire 66.

La sortie des moyens 64 de comparaison est reliée à chacun des émetteurs 20.

Le dispositif de filtration 1 selon l'invention fonctionne de la manière suivante.

Lors du fonctionnement du filtre 2, on applique une dépression au conduit d'évacuation 17 de sorte que le liquide 3 à filtrer passe à travers l'élément filtrant 11 et est ensuite évacué sous la forme du filtrat 14.

Au cours de la filtration, le débitmètre 62 relève régulièrement le débit du filtrat 14 obtenu et transmet ce débit aux moyens 64 de comparaison.

L'accroissement du degré de colmatage se traduit par une baisse du débit relevé. Lorsque le degré de colmatage de l'élément filtrant 11 est supérieur au seuil prédéfini, c'est-à-dire lorsque le débit du filtrat 14 obtenu passe en dessous d'un certain seuil, les moyens 64 de comparaison envoient un signal d'activation aux émetteurs d'ultrasons 20.

Les émetteurs 20 émettent alors des ultrasons qui sont couplés acoustiquement par l'intermédiaire des blocs 26 et du liquide 3 circulant dans la cavité 10, notamment du filtrat 14 qui se trouve dans la partie périphérique 13, vers l'élément filtrant 11 et expulsent les particules déposées à l'intérieur et sur la paroi interne de l'élément filtrant 11. Les particules sont alors à nouveau entraînées par le liquide 3 à filtrer et n'obturent plus la surface active de l'élément filtrant.

Ainsi, le filtre retrouve rapidement son efficacité de filtrage d'origine sans qu'un arrêt de filtration soit nécessaire. On comprend donc que le dispositif de filtration 1 permet un fonctionnement en continu, ceci dans des conditions de filtrage optimales.

Dans une variante simplifiée du dispositif de filtrage, on prévoit de supprimer le débitmètre 62 et de réaliser l'unité 23 sous la forme d'une unité d'activation intermittente de chaque émetteur 20 pour activer les émetteurs 20 pendant une période déterminée à des intervalles de temps prédéfinis.

Bien entendu, dans une version de base, on prévoit de faire fonctionner les émetteurs d'ultrasons 20 en continu.

Selon une autre variante du dispositif, on prévoit de fixer deux émetteur d'ultrasons 20 sur des faces respectivement opposées d'un même bloc métallique 26 comme ceux représentés sur les figures 2 et 3.

En outre, l'invention s'applique également à des filtres pour la filtration frontale en adaptant la fréquence d'émission et la puissance des émetteurs d'ultrasons à la nouvelle géométrie, notamment à celle de l'enveloppe externe du filtre et à celle de son élément filtrant.

Dans le cas d'une filtration frontale, les performances de filtration du dispositif selon l'invention sont largement améliorées par rapport aux filtres connus du même type et les interventions de maintenance pour effectuer un chasse des particules retenues par le filtre sont beaucoup plus espacées dans le temps.

Par ailleurs, le dispositif 18 contre le colmatage peut facilement être monté sur des filtres existants pour former un dispositif de filtrage 1.

## Revendications

1. Dispositif contre le colmatage d'un filtre (2) d'un fluide, notamment d'un liquide (3) comportant un élément filtrant (11) disposé dans une cavité (10) de filtre délimitée par une enveloppe (8) externe, caractérisé en ce qu'il comprend au moins un émetteur d'ultrasons (20) et des moyens associés de couplage des ultrasons émis par l'émetteur (20) dans ladite cavité (10), en direction de l'élément filtrant (11), pour empêcher le colmatage de l'élément filtrant (11) lors du fonctionnement du filtre (2).

2. Dispositif selon la revendication 1, caractérisé en ce que les ultrasons émis par chaque émetteur (20) possèdent une fréquence comprise entre 30 et 50kHz, et notamment de 40kHz.

3. Dispositif selon la revendication 1 ou 2, caractérisé en ce que la puissance d'émission de chaque émetteur (20) est supérieure à 100 W, notamment comprise entre 100W et 400W, ou supérieure à 600W.

4. Dispositif selon l'une quelconque des revendications 1 à 3, caractérisé en ce que les moyens (22) de couplage comprennent pour chaque émetteur d'ultrasons (20) une masse oscillante (25) qui est interposée entre l'émetteur d'ultrasons (20) et la cavité (10), et qui est acoustiquement accordée par rapport à la géométrie de la cavité (10) et à celle de l'élément filtrant (11).

5. Dispositif selon la revendication 4, caractérisé en ce que la masse oscillante est en métal.

6. Dispositif selon la revendication 4 ou 5, caractérisé en ce que chaque masse oscillante (25) entoure le filtre (2) et est en contact intime avec celui-ci.

7. Dispositif selon la revendication 6, caractérisé en ce qu'il comporte pour une masse oscillante au moins un émetteur d'ultrasons disposés de part et d'autre du filtre.

8. Dispositif selon l'une quelconque des revendications 4 à 7, caractérisé en ce que chaque masse oscillante (25) comporte un passage (28) destiné à former l'enveloppe externe (8) du filtre (2).

9. Dispositif selon l'une quelconque des revendications 4 à 7, caractérisé en ce que chaque masse oscillante (26) comporte un passage (28) destiné à contenir l'enveloppe externe (8) du filtre (2).

10. Dispositif selon la revendication 9, caractérisé en ce qu'un milieu de transfert (47), notamment une graisse, est prévu entre la masse oscillante (25) et l'enveloppe externe (8) du filtre.

11. Dispositif selon l'une quelconque des revendications 1 à 10, dans lequel le filtre (2) est un filtre de filtration tangentielle d'un liquide (3), dont l'enveloppe externe (8) est réalisée par un tube (9), et dont l'élément filtrant (11) possède une forme tubulaire et est disposé sensiblement coaxialement dans le tube (9) de façon à diviser la cavité (10) en une partie centrale (12) traversée par le liquide à filtrer (3) et une partie périphérique (13) d'accumulation de filtrat (14), une sortie (15) de filtrat étant ménagée dans la paroi de l'enveloppe (8), caractérisé en ce qu'il comporte au moins deux émetteurs d'ultrasons (20) et deux moyens associés (22) de couplage des ultrasons émis par les émetteurs (20) dans la cavité (10), les émetteurs (20) et les moyens (22) associés de couplage étant agencés respectivement de part et d'autre de la sortie (15) de filtrat.

12. Dispositif selon la revendication 11, caractérisé en ce que la direction d'émission de chaque émetteur (20) est orientée perpendiculairement (24) à l'axe longitudinal (X-X) de l'enveloppe externe (8) et de l'élément filtrant (11).

13. Dispositif selon la revendication 12, caractérisé en ce que chaque masse oscillante (26) entoure l'enveloppe externe (8) du filtre (2) et comporte au moins un évidement (50) s'étendant suivant un plan longitudinal contenant l'axe (X-X) du filtre (2), perpendiculaire à la direction d'émission (24) de l'émetteur (20) correspondant pour concentrer l'intensité des ultrasons au niveau de l'élément filtrant (11).

14. Dispositif selon l'une quelconque des revendications 1 à 13, caractérisé en ce qu'il comprend en outre une unité (23) d'activation intermittente de chaque émetteur (20).

15. Dispositif selon l'une quelconque des revendications 1 à 13, caractérisé en ce qu'il comprend un capteur (60) de mesure du degré de colmatage de l'élément filtrant (11), des moyens (64) de comparaison du degré mesuré de colmatage avec un seuil prédéfini, qui commandent l'activation dudit au moins un émetteur d'ultrasons (20) lorsque le degré de colmatage de l'élément filtrat (11) est supérieur au seuil prédéfini.

16. Dispositif selon la revendication 15, caractérisé en ce que le capteur (60) de mesure du degré de colmatage de l'élément filtrant (11) est un débitmètre (62) de mesure du débit du filtrat (14) obtenu.

17. Dispositif de filtrage comprenant un filtre (2) d'un fluide, notamment d'un liquide (3) comportant un élément filtrant (11) disposé dans une cavité (10) de filtre délimitée par une enveloppe (8) externe, caractérisé en ce qu'il comprend en outre un dispositif (18) contre le colmatage du filtre selon l'une quelconque des revendications 1 à 16.
